# EUROPEAN PATENT APPLICATION

(11) **EP 4 572 259 A1**
(43) Date of publication of application: **18.06.2025**
(21) Application number: 22954656.9
(22) Date of filing: 12.08.2022
(51) Int. Cl.: H04L 27/00

(54) **BACKHAUL LINK BEAM INDICATION METHODS AND APPARATUS, AND STORAGE MEDIUM**

(71) Applicant: Beijing Xiaomi Mobile Software Co., Ltd., Beijing 100085 (CN)
(72) Inventor: LIU, Min, Beijing 100085 (CN)
(74) Representative: Stöckeler, Ferdinand
(86) International application number: PCT/CN2022/112304
(87) International publication number: WO 2024/031704

(57) **Abstract**

Backhaul link beam indication methods and apparatus, and a storage medium. A method comprises: receiving signaling sent by a network device and used for configuring a beam of a backhaul link, the signaling comprising beam indication information; and according to the beam indication information, determining from a plurality of beams configured by the network device for a control link of a network control repeater a target beam used by the backhaul link. A network control repeater receives beam indication information in signaling sent by a network device, and according to the beam indication information, can quickly and accurately determine from a plurality of beams used by a control link for communication between a mobile terminal and the network device in the network control repeater a beam used by a backhaul link for communication between a repeater and the network device in the network control repeater, so that the network control repeater can quickly determine a beam with better backhaul link performance without testing the plurality of beams one by one, effectively improving the communication efficiency and performance.

## Description

### FIELD

The present disclosure relates to the field of communication technology, in particular to a backhaul link beam indication information, an apparatus, and a storage medium.

### BACKGROUND

In the related art, a beam configuration for a control link is indicated with respect to each signal/channel, or indicated with respect to a plurality of channels/signals. At this time, the plurality of channels is indicated using the same beam, and downlink reception and uplink transmission. For example, physical uplink control channel (PUCCH), physical uplink shared channel (PUSCH), physical downlink control channel (PDCCH), and physical downlink shared channel (PDSCH) use the same beam. In this way, in a case that the beam for the control link is configured, a plurality of transmission configuration indicator (TCI) states is configured for the control link of a mobile terminal to indicate a plurality of beams. In this case, there is an urgent need to determine, by a network controlled repeater (NCR), an optimal beam for a backhaul link more rapidly and accurately.

### SUMMARY

In order to overcome the problems in the related art, the present disclosure provides a method for backhaul link beam indication, an apparatus and a storage medium.

In a first aspect, the present disclosure provides in some embodiments a method for backhaul link beam indication, applied to an NCR, including: receiving a signaling for configuring a beam for a backhaul link sent by a network device, in which the signaling includes beam indication information; and determining a target beam to be used by the backhaul link from a plurality of beams configured by the network device for a control link of the NCR based on the beam indication information.

In a second aspect, the present disclosure provides in some embodiments a method for backhaul link beam indication, applied to a network device, including: sending a signaling for configuring a beam for a backhaul link to an NCR, in which the signaling includes beam indication information, in which the NCR determines a target beam to be used by the backhaul link from a plurality of beams configured by the network device for a control link of the NCR based on the beam indication information.

In a third aspect, the present disclosure provides in some embodiments an apparatus for backhaul link beam indication, applied to an NCR, including: a reception module configured to receive a signaling for configuring a beam for a backhaul link sent by a network device, in which the signaling includes beam indication information; and a determination module configured to determine a target beam to be used by the backhaul link from a plurality of beams configured by the network device for a control link of the NCR based on the beam indication information.

In a fourth aspect, the present disclosure provides in some embodiments an apparatus for backhaul link beam indication, applied to a network device, including: a sending module configured to send a signaling for configuring a beam for a backhaul link to an NCR, in which the signaling includes beam indication information and the NCR determines a target beam to be used by the backhaul link from a plurality of beams configured by the network device for a control link of the NCR based on the beam indication information.

In a fifth aspect, the present disclosure provides in some embodiments a device for backhaul link beam indication, including: a processor; and a memory storing therein instructions executable by a processor, in which the processor is configured to: receive a signaling for configuring a beam for a backhaul link sent by a network device, in which the signaling includes beam indication information; and determine a target beam to be used by the backhaul link from a plurality of beams configured by the network device for a control link of the NCR based on the beam indication information.

In a sixth aspect, the present disclosure provides in some embodiments a device for backhaul link beam indication, including: a processor; and a memory storing therein instructions executable by a processor, in which the processor is configured to: send a signaling for configuring a beam for a backhaul link to an NCR, in which the signaling includes beam indication information and the NCR determines a target beam to be used by the backhaul link from a plurality of beams configured by the network device for a control link of the NCR based on the beam indication information.

In a seventh aspect, the present disclosure provides in some embodiments a computer-readable storage medium storing therein computer program instructions. The computer program instructions, when executed by a processor, implement the steps of the method for backhaul link beam indication in the first aspect, or the steps of the method for backhaul link beam indication in the second aspect.

In the technical solution provided by the embodiments of the present disclosure, the NCR receives the beam indication information in the signaling sent by the network device, and rapidly and accurately determines the beam to be used by the backhaul link for the communication between a forwarder in the NCR and the network device from the plurality of beams used by the control link for the communication between a mobile terminal in the NCR and the network device based on the beam indication information. It is able for the NCR to rapidly determine a beam with a better performance for the backhaul link without any necessity to test the plurality of beams one by one, thereby improving the communication efficiency and performance.

It should be appreciated that the above-mentioned general description and the following detailed description are for illustrative and explanatory purposes, but shall not be used to limit the embodiments of the present disclosure.

### BRIEF DESCRIPTION OF THE DRAWINGS

The above-mentioned and/or other aspects and advantages of the present disclosure may become apparent and easily understandable in the following description in conjunction with the drawings.
FIG. 1 is a schematic view showing system architecture based on an NCR according to an illustrative embodiment of the present disclosure;
FIG. 2 is a flowchart of a method for backhaul link beam indication according to an illustrative embodiment of the present disclosure;
FIG. 3 is a flowchart of the method for backhaul link beam indication according to an illustrative embodiment of the present disclosure;
FIG. 4 is a flowchart of the method for backhaul link beam indication according to an illustrative embodiment of the present disclosure;
FIG. 5 is a flowchart of the method for backhaul link beam indication according to an illustrative embodiment of the present disclosure;
FIG. 6 is a flowchart of the method for backhaul link beam indication according to an illustrative embodiment of the present disclosure;
FIG. 7 is a flowchart of the method for backhaul link beam indication according to an illustrative embodiment of the present disclosure;
FIG. 8 is a flowchart of the method for backhaul link beam indication according to an illustrative embodiment of the present disclosure;
FIG. 9 is a flowchart of the method for backhaul link beam indication according to an illustrative embodiment of the present disclosure;
FIG. 10 is a flowchart of the method for backhaul link beam indication according to an illustrative embodiment of the present disclosure;
FIG. 11 is a flowchart of the method for backhaul link beam indication according to an illustrative embodiment of the present disclosure;
FIG. 12 is a flowchart of the method for backhaul link beam indication according to an illustrative embodiment of the present disclosure;
FIG. 13 is a flowchart of the method for backhaul link beam indication according to an illustrative embodiment of the present disclosure;
FIG. 14 is a flowchart of the method for backhaul link beam indication according to an illustrative embodiment of the present disclosure;
FIG. 15 is a block diagram of an apparatus for backhaul link beam indication according to an illustrative embodiment of the present disclosure;
FIG. 16 is a block diagram of the apparatus for backhaul link beam indication according to an illustrative embodiment of the present disclosure;
FIG. 17 is a block diagram of an NCR according to an illustrative embodiment of the present disclosure; and
FIG. 18 is a block diagram of a network device according to an illustrative embodiment of the present disclosure.

### DETAILED DESCRIPTION

The present disclosure will be described hereinafter in details in conjunction with illustrative embodiments, and examples thereof are shown in the drawings. Identical or similar reference numbers in the drawings represent an identical or similar element or elements having an identical or similar function. In addition, the following embodiments are for illustrative purposes only and intend to interpret the present disclosure, but shall not be used to limit the scope of the present disclosure.

An environment where the embodiments of the present disclosure are implemented will be described hereinafter at first.

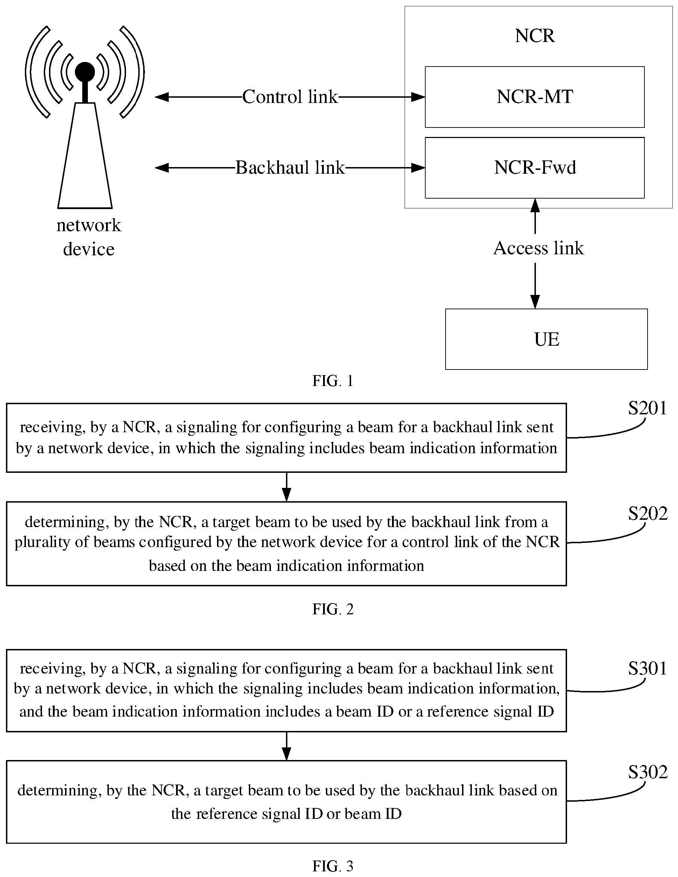

FIG. 1 illustratively shows system architecture based on an NCR, and the NCR may be used to increase a system coverage with a low cost. As shown in FIG. 1, the NCR includes two parts, i.e., an NCR mobile terminal (NCR-MT) and an NCR-forwarding (NCR-Fwd). The NCR-MT is used to receive a control command sent by a network device (e.g., base station or high-layer network device), and the control command is used to control behaviors of the NCR-Fwd, i.e., behaviors on a backhaul link and a control link, e.g., beam indication direction as well as the enabling and disabling of forwarding. Referring to FIG. 1, the backhaul link is used for a communication between the NCR-Fwd and the network device, and the control link is used for a communication between the NCR-Fwd and a user equipment, so that the user equipment communicates with the network device via the NCR. It should be appreciated that the NCR may also communicate with a plurality of user equipments.

To be specific, the high-layer network device includes a mobility management network element, a session management network element, a user plane network element and a data network (DN). The user equipment communicates with the DN via the base station and the user plane network element.

The network device may be a network element in 4^{th}-Generationion (4G) architecture or a network element in 5^{th}-Generation (5G) architecture.

The DN, which may be a protocol data unit (PDN) network, provides a data transmission service, e.g., Internet service or IP Multi-media service (IMS), for a user.

The mobility management network element includes an access and mobility management function (AMF) in the 5G. The mobility management network element takes charge of access and mobility management over the user equipment and/or NCR in a mobile network. The AMF takes charge of access and mobility management over the user equipment and/or the NCR, routing of a non-access stratum (NAS) message, selection of a session management function (SMF), etc. The AMF serves as an intermediate network element for transmitting a session management message between the user equipment and/or the NCR and the SMF.

The session management network element takes charge of forwarding path management, e.g., issuing a message forwarding policy to the user plane network element to indicate the user plane network element to process and forward a message based on the message forwarding policy. The session management network element may be a SMF in 5G, which takes charge of session management, e.g., session creation/modification/deletion, selection of the user plane network element, allocation and management of user plane tunnel information, etc.

The user plane network element may be a user plane function (UPF) in 5G architecture. The UPF takes charge of processing and forwarding a message.

The system architecture provided in the embodiments of the present disclosure further includes a data management network element used for processing an identity (ID) of the user equipment and/or NCR, access authentication, registration, mobility management, etc. In a 5G communication system, the data management network element is a unified data management (UDM) network element.

The system architecture provided in the embodiments of the present disclosure further includes a policy control function (PCF) or a policy and charging control function (PCRF). The PCF or PCRF takes charge of policy control decision and flow-based charging control.

The system architecture provided in the embodiments of the present disclosure further includes a network storage network element for maintaining real-time information about all network function services in a network. In the 5G communication system, the network storage network element may be a network repository function (NRF) network element. The NRF network element stores therein information about a plurality of network elements, e.g., information about the SMF, information about the UPF, and information about the AMF. The network elements in the network, e.g., the AMF, the SMF and the UPF, may all be coupled to the NRF, so that, on one hand, the network element registers its own network element information into the NRF, and on the other hand, the other element obtains the information about the registered network element from the NRF. The other network element (e.g., the AMF) requests to the NRF to obtain an available network element based on a type of the network element, a data network ID and unknown area information. If a domain name system (DNS) server is integrated in the NRF, a corresponding selection function network element (e.g., AMF) requests the NRF to obtain the other network element to be selected (e.g., SMF).

A base station in the network device may serve as a specific implementation form of an access network (AN), and may also be called as an access node. In a case of a wireless access form, it is called as a radio access network (RAN), which is used for providing a wireless access service for the user equipment and/or NCR. To be specific, the access node is a base station in a global system for mobile communication (GSM) system or a code division multiple access (CDMA) system, or a NodeB in a wideband code division multiple access (WCDMA), or an evolutional node B (eNB or eNodeB) in a long term evolution (LTE) system, or a base station device, a small base station device, a wireless fidelity access point (WiFiAP) or a worldwide interoperability for microwave access base station (WiMax BS) in a 5Gnetwork, which will not be particularly defined herein.

The user equipment (UE) may also be called as terminal, access terminal, subscriber unit, subscriber station, mobile station, remote station, remote terminal, mobile device, user terminal, wireless communication device, user agent or user device. The UE may be a cellular phone, a cordless phone, a session initiation protocol (SIP) phone, a wireless local loop (WLL) station, a personal digital assistant (PDA), a handheld device having a wireless communication function, a computing device or other processing device coupled to a wireless modem, a vehicle-mounted device, a wearable device, or an Internet of things (IoT) terminal device, e.g. fire detection sensor, smart water meter/electricity meter, or a factory monitoring device.

The above functions may be network elements in a hardware device, software functions running on dedicated hardware, or instantiated, virtualized functions on a platform (e.g., cloud platform).

Based on the above-mentioned system architecture, beamforming information is indicated by semi-statically indicating a beam on the backhaul link and/or control link. The control link and the backhaul link are both links between the NCR and the network device, so it is presumed that the control link has the same large-scale channel characteristic as the backhaul link at least in a case that the NCR-MT and the NCR-Fwd operate at the same or similar frequency band. Hence, the beam used on the control link may be assumed as the beam on the backhaul link.

In the related art, the beam configuration for the control link is indicated with respect to each signal/channel, or indicated with respect to a plurality of channels/signals. At this time, the plurality of channels is indicated using the same beam, and downlink reception and uplink transmission, e.g., PUCCH, PUSCH, PDCCH and PDSCH, use the same beam uniformly. In this way, in a case that the beam for the control link is configured, a plurality of TCI states is configured for the control link of the mobile terminal to indicate a plurality of beams. In this case, there is an urgent need to determine, by the NCR, an optimal beam for the backhaul link more rapidly and accurately.

To be specific, in the related art, in a case that a plurality of beams is configured for the control link of the mobile terminal, the NCR needs to test each beam to determine the beam with a best performance for the backhaul link, so the efficiency of determining the beam is low, and it is impossible to ensure the communication instantaneity.

In order to solve the problems in the related art, the present disclosure provides in some embodiments a method for backhaul link beam indication, an apparatus and a storage medium.

FIG. 2 is a flowchart of a method for backhaul link beam indication according to an illustrative embodiment of the present disclosure, and the method is applied to an NCR. As shown in FIG. 2, the method includes the following steps.

S201: the NCR receives a signaling for configuring a beam for a backhaul link sent by a network device, and the signaling includes beam indication information.

The network device is a base station or a high-layer network device. For example, the high-layer network device is a network device in a core network (e.g., an access and mobility management entity).

S202: the NCR determines a target beam to be used by the backhaul link from a plurality of beams configured by the network device for a control link of the NCR based on the beam indication information.

The target beam is a beam having a better transmission effect in the plurality of beams configured by the network device for the control link.

For example, the beam indication information includes one or more of a beam ID, a reference signal ID, beam-related information, or a corresponding relation between the backhaul link and a target physical channel in the NCR.

In a case that the beam indication information includes more than one of the beam ID, the reference signal ID, the beam-related information or the corresponding relation between the backhaul link and the target physical channel in the NCR, the NCR determines a rate of the target beam based on different information, and selects the information corresponding to a largest rate from the beam indication information to determine the target beam to be used by the backhaul link.

There is a one-to-one corresponding relation between each of the beam ID and the Reference Signal ID (RS ID) and each of the plurality of beams configured by the network device for the control link of the NCR. The target physical channel is any channel in the control link for the communication between the network device and the NCR, e.g., the target physical channel may be a channel with a best performance detected by the network device.

For example, the beam-related information includes one or more of TCI information, SRI information or QCL information configured by the network device for the control link.

A TCI state sent in a case of configuring the beam for the control link of the NCR includes a TCI state ID for uniquely identifying the TCI state, and the TCI information is the TCI state ID in a TCI. Identically, the SRI information includes a unique ID corresponding to an SRI, and the QCL information includes a unique ID corresponding to a QCL.

Alternatively, the TCI information is a TCI state, the SRI information includes an SRI, and the QCL information includes a QCL, which will not be particularly defined herein.

It should be appreciated that the TCI state may include the QCL, and the QCL may indicate a corresponding spatial reception parameter. In a case of beam correspondence, a spatial sending parameter is the same as the spatial reception parameter for a UE or NCR, so the beam may be determined based on the QCL. In addition, channel characteristics included in different QCL types are different, and two reference signals having a QCL relation have the same channel characteristic.

In addition, the SRI includes a spatial relation between the NCR and the network device, so the NCR may determine a beam corresponding to the spatial relation from the plurality of beams based on the spatial relation.

Based on the above-mentioned scheme, the network device sends any of the TCI information, the SRI information or the QCL information corresponding to the target beam, and the NCR determines the target beam based on the corresponding beam indication information without any necessity to test the plurality of beams configured for the control link one by one, so it is able to improve the efficiency of determining the beam for the backhaul link.

For another example, the signaling for configuring the beam for the backhaul link is a RRS signaling sent by a base station, or a signaling carried in an OAM message sent by a high-layer network device.

Optionally, the RRC signaling is sent by the base station via unicasting or multicasting.

It should be appreciated that there may exist a plurality of NCRs communicating with the base station, and for the NCRs or NCR groups accessing the base station, the base station may send the RRC signaling, so as to indicate the beam to be used by the backhaul link of each NCR or NCR group.

Based on the above-mentioned scheme, the base station sends the RRC signaling to the NCR via unicasting or multicasting, so as to indicate the beam to be used by the backhaul link of the NCR, thereby to ensure the performance of the beam to be used by the backhaul link of each NCR.

In the embodiments of the present disclosure, the NCR receives the beam indication information in the signaling sent by the network device, and rapidly and accurately determines the beam to be used by the backhaul link for the communication between a forwarder in the NCR and the network device from the plurality of beams used by the control link for the communication between a mobile terminal in the NCR and the network device based on the beam indication information. It is able for the NCR to rapidly determine a beam with a better performance for the backhaul link without any necessity to test the plurality of beams one by one, thereby improving the communication efficiency and performance.

FIG. 3 is a flowchart of a method for backhaul link beam indication according to an illustrative embodiment of the present disclosure, and this method is applied to an NCR. As shown in FIG. 3, the method includes the following steps.

S301: the NCR receives a signaling for configuring a beam for a backhaul link sent by a network device, the signaling includes beam indication information, and the beam indication information includes a beam ID or a reference signal ID.

S302: the NCR determines a target beam to be used by the backhaul link based on the reference signal ID or beam ID.

It should be appreciated that, after configuring a plurality of beams for a control link of the NCR, each beam in the plurality of beams or a reference signal corresponding to each beam is uniquely identified, and there are a unique corresponding relation between the reference signal ID and the reference signal, and a unique corresponding relation between the beam ID and the beam.

The network device may be a base station or a high-layer network device, and the signaling may be a RRC signaling sent by the base station via unicasting or multicasting or a signaling carried in an OAM message sent by the high-layer network device, which will not be particularly defined herein.

Based on the above scheme, the NCR receives the beam ID or the reference signal ID in the signaling sent by the network device, and then directly determines the target beam to be used by the backhaul link and indicated by the network device. It is able for the NCR to rapidly determine a beam with a better performance for the backhaul link without any necessity to test the plurality of beams one by one, thereby improving the communication efficiency and performance.

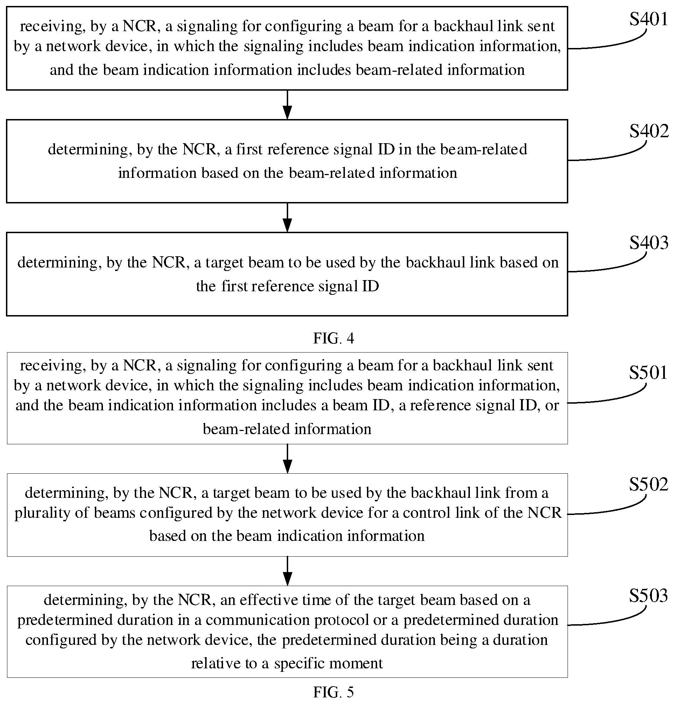

FIG. 4 is a flowchart of a method for backhaul link beam indication according to an illustrative embodiment of the present disclosure, and this method is applied to an NCR. As shown in FIG. 4, the method includes the following steps.

S401: the NCR receives a signaling for configuring a beam for a backhaul link sent by a network device, the signaling includes beam indication information, and the beam indication information includes beam-related information.

S402: the NCR determines a first reference signal ID in the beam-related information based on the beam-related information.

S403: the NCR determines a target beam to be used by the backhaul link based on the first reference signal ID.

The beam-related information includes one or more of TCI information, SRI information or QCL information configured by the network device for a control link.

Based on the above-mentioned scheme, the NCR receives the beam-related information in the signaling sent by the network device, determines corresponding TCI state, SRI and/or QCL based on the TCI information, the SRI information and/or the QCL information in the beam-related information, determines a corresponding reference signal ID based on the TCI state, the SRI and/or the QCL, and then determines the target beam indicated by the network device for the backhaul link of the NCR based on the reference signal ID. It is able to rapidly determine a beam with a better performance for the backhaul link without any necessity to test the plurality of beams one by one, thereby improving the communication efficiency and performance.

FIG. 5 is a flowchart of a method for backhaul link beam indication according to an illustrative embodiment of the present disclosure, and this method is applied to an NCR. As shown in FIG. 5, the method includes the following steps.

S501: the NCR receives a signaling for configuring a beam for a backhaul link sent by a network device, the signaling includes beam indication information, and the beam indication information includes a beam ID or a reference signal ID, or includes beam-related information.

S502: the NCR determines a target beam to be used by the backhaul link from a plurality of beams configured by the network device for a control link of the NCR based on the beam indication information.

S503: the NCR determines an effective time of the target beam based on a predetermined duration in a communication protocol or a predetermined duration configured by the network device, and the predetermined duration is a duration relative to a specific moment.

The specific moment includes an end moment when the NCR finishes receiving a PDSCH where the beam indication information is located, and/or a moment when the NCR feeds back a last symbol of an uplink resource for HARQ-ACK information for the PDSCH including the beam indication information.

The network device is a base station or a high-layer network device, and the signaling is a RRC signaling sent by the base station via unicasting or multicasting or a signaling carried in an OAM message sent by the high-layer network device, which will not be particularly defined herein.

For example, the predetermined duration includes X unit durations, and the unit duration is a duration corresponding to one slot, a duration corresponding to one symbol or a duration corresponding to one subframe, which will not be particularly defined herein.

For example, if the end moment when the NCR finishes receiving the PDSCH where the beam indication information is located is a moment corresponding to a slot n, the unit duration is slot, where slot represents a time slot, and n represents a serial number of a slot. If the effective time of the target beam to be used by the backhaul link of the NCR is a moment corresponding to slot n+X, a compression model is enabled at the moment corresponding to a slot with a serial number of n+X.

Based on the above-mentioned scheme, the predetermined duration is speculated in the communication protocol, and the effective time of the target beam is determined based on the specific moment corresponding to the beam indication information, so as to enable the NCR to reliably communicate with the network device based on the backhaul link using the beam, and ensure the communication quality between the NCR and the network device.

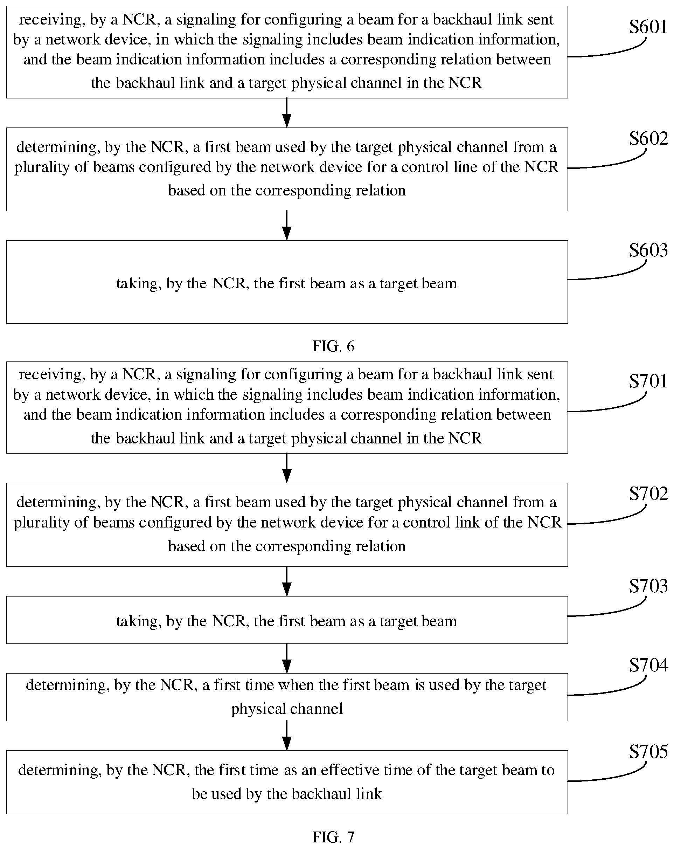

FIG. 6 is a flowchart of a method for backhaul link beam indication according to an illustrative embodiment of the present disclosure, and this method is applied to an NCR. As shown in FIG. 6, the method includes the following steps.

S601: the NCR receives a signaling for configuring a beam for a backhaul link sent by a network device, the signaling includes beam indication information, and the beam indication information includes a corresponding relation between the backhaul link and a target physical channel in the NCR.

S602: the NCR determines a first beam to be used by the target physical channel from a plurality of beams configured by the network device for a control link of the NCR based on the corresponding relation.

S603: the NCR takes the first beam as a target beam.

The network device is a base station or a high-layer network device, and the signaling is a RRC signaling sent by the base station via unicasting or multicasting or a signaling carried in an OAM message sent by the high-layer network device, which will not be particularly defined herein.

It should be appreciated that the target physical channel is a channel for the control link for the communication between a mobile terminal of the NCR and the network device, and this channel is a channel with better communication performance determined by the network device.

To be specific, in S602 and S603, the NCR determines a reference signal ID of the first beam to be used by the target physical channel based on the corresponding relation, and determines the target beam based on the reference signal ID; or determines a beam ID of the beam to be used by the target physical channel, and determines the target beam based on the beam ID.

Based on the above scheme, the NCR receives the corresponding relation between the backhaul link and the target physical channel in the NCR in the beam indication information sent by the network device, and determines the target beam to be used by the channel corresponding to the backhaul link based on the corresponding relation. It is able to rapidly determine the beam with a better performance for the backhaul link without any necessity to test the plurality of beams one by one, thereby improving the communication efficiency and performance.

FIG. 7 is a flowchart of a method for backhaul link beam indication according to an illustrative embodiment of the present disclosure, and this method is applied to an NCR. As shown in FIG. 7, the method includes the following steps.

S701: the NCR receives a signaling for configuring a beam for a backhaul link sent by a network device, the signaling includes beam indication information, and the beam indication information includes a corresponding relation between the backhaul link and a target physical channel in the NCR.

S702: the NCR determines a first beam to be used by the target physical channel from the plurality of beams configured by the network device for a control link of the NCR based on the corresponding relation.

S703: the NCR takes the first beam as a target beam.

S704: the NCR determines a first time when the first beam is used by the target physical channel.

S705: the NCR determines the first time as an effective time of the target beam to be used by the backhaul link.

The network device is a base station or a high-layer network device, and the signaling is a RRC signaling sent by the base station via unicasting or multicasting or a signaling carried in an OAM message sent by the high-layer network device, which will not be particularly defined herein.

It should be appreciated that, in the embodiments of the present disclosure, the first beam to be used by the target physical channel is a beam which is to be used, but has not been currently used, by the target physical channel.

Based on the above-mentioned scheme, in a case that the beam indication information includes the corresponding relation between the backhaul link and the target physical channel in the NCR, the effective time of the target beam determined for the backhaul link is the same as a time when the first beam is used by the target physical channel corresponding to the backhaul link, so it is able to ensure the reliability of the communication between the NCR and the network device via the backhaul link.

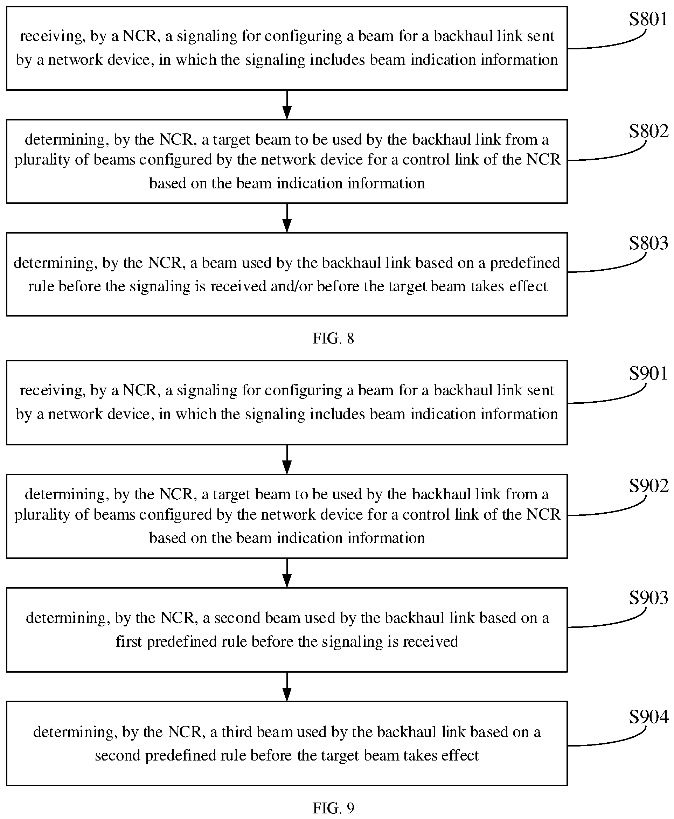

FIG. 8 is a flowchart of method for backhaul link beam indication according to an illustrative embodiment of the present disclosure, and this method is applied to an NCR. As shown in FIG. 8, the method includes the following steps.

S801: the NCR receives a signaling for configuring a beam for a backhaul link sent by a network device, and the signaling includes beam indication information.

S802: the NCR determines a target beam to be used by the backhaul link from a plurality of beams configured by the network device for a control link of the NCR based on the beam indication information.

S803: the NCR determines a beam used by the backhaul link before the signaling is received and/or before the target beam takes effect based on a predefined rule.

The network device is a base station or a high-layer network device, and the signaling is a RRC signaling sent by the base station via unicasting or multicasting or a signaling carried in an OAM message sent by the high-layer network device, which will not be particularly defined herein.

For example, the beam indication information includes one or more of a beam ID, a reference signal ID, beam-related information, or a corresponding relation between the backhaul link and a target physical channel in the NCR.

In addition, the beam-related information includes one or more of TCI information, SRI information or QCL information configured by the network device for the control link.

The beam used by the backhaul link and determined based on the predefined rule before the signaling is received and/or before the target beam takes effect is a beam other than the plurality of beams configured by the network device for the control link of the NCR, or a beam included in the plurality of beams, and the predefined rule is preconfigured in the NCR, or sent by the network device to the NCR, which will not be particularly defined herein.

Based on the above-mentioned scheme, the beam used by the backhaul link is determined based on the predefined rule before the signaling is received and/or before the target beam takes effect, so that a forwarder of the NCR still performs communication via the backhaul link using the beam determined based on the predefined rule before the beam for the backhaul link indicated by the network device takes effect. Hence, it is able to ensure the robustness of the communication between the NCR and the network device.

FIG. 9 is a flowchart of a method for backhaul link beam indication according to an illustrative embodiment of the present disclosure, and this method is applied to an NCR. As shown in FIG. 9, the method includes the following steps.

S901: the NCR receives a signaling for configuring a beam for a backhaul link sent by a network device, and the signaling includes beam indication information.

S902: the NCR determines a target beam to be used by the backhaul link from a plurality of beams configured by the network device for a control link of the NCR based on the beam indication information.

S903: the NCR determines a second beam used by the backhaul link based on a first predefined rule before the signaling is received.

S904: the NCR determines a third beam used by the backhaul link based on a second predefined rule before the target beam takes effects.

The network device is a base station or a high-layer network device, and the signaling is a RRC signaling sent by the base station via unicasting or multicasting or a signaling carried in an OAM message sent by the high-layer network device, which will not be particularly defined herein.

For example, the beam indication information includes one or more of a beam ID, a reference signal ID, beam-related information, or a corresponding relation between the backhaul link and a target physical channel in the NCR.

In addition, the beam-related information includes one or more of TCI information, SRI information or QCL information configured by the network device for the control link.

The first predefined rule before the signaling is received may be the same as, or different from, the second predefined rule before the target beam takes effect, and thereby the second beam determined based on the first predefined rule may be the same as, or different from, the third beam determined based on the send predefined rule. Modes of determining the beam used by the backhaul link based on the first predefined rule and the second predefined rule will be described hereinafter in more details, and thus will not be particularly defined herein.

Based on the above-mentioned scheme, the beam used by the backhaul link before the signaling is received and the beam used by the backhaul link before the target beam takes effect are determined based on the first predefined rule and the second predefined rule respectively, so it is able to ensure that the beam used by the NCR before the signaling is received and the beam used by the NCR before the target beam takes effect have better communication performance, thereby to ensure the communication quality between a forwarder of the NCR and the network device.

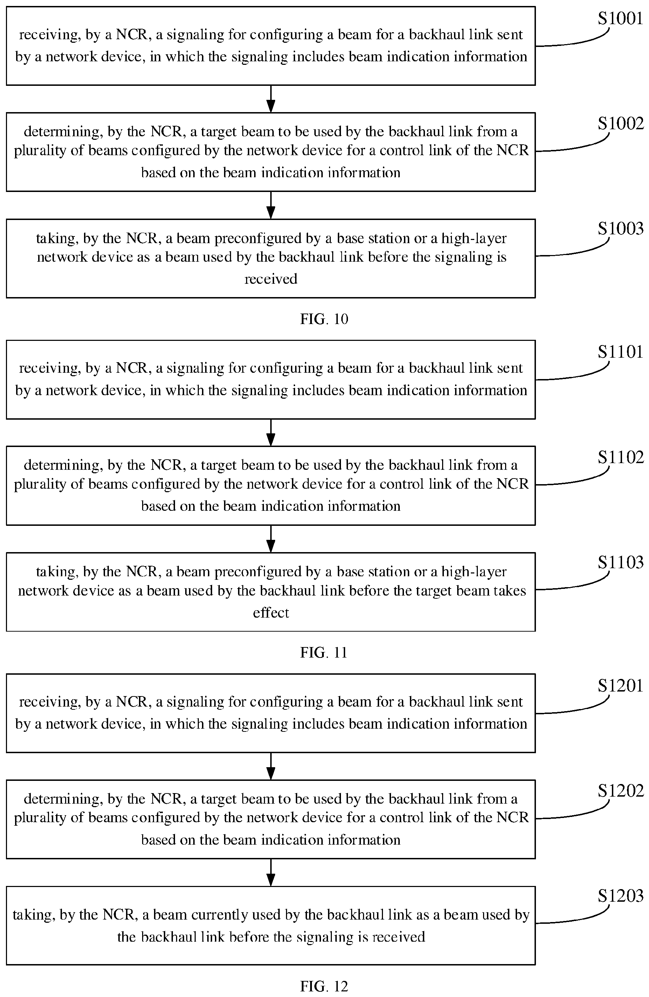

FIG. 10 is a flowchart of a method for backhaul link beam indication according to an illustrative embodiment of the present disclosure, and this method is applied to an NCR. As shown in FIG. 10, the method includes the following steps.

S1001: the NCR receives a signaling for configuring a beam for a backhaul link sent by a network device, and the signaling includes beam indication information.

S1002: the NCR determines a target beam to be used by the backhaul link from a plurality of beams configured by the network device for a control link of the NCR based on the beam indication information.

S1003: the NCR takes a beam preconfigured by a base station or a beam preconfigured by a high-layer network device as a beam used by the backhaul link before the signaling is received.

The network device is a base station or a high-layer network device, and the signaling for configuring the beam for the backhaul link is a RRC signaling sent by the base station via unicasting or multicasting or a signaling carried in an OAM message sent by the high-layer network device, which will not be particularly defined herein.

For example, the beam indication information includes one or more of a beam ID, a reference signal ID, beam-related information, or a corresponding relation between the backhaul link and a target physical channel in the NCR.

In addition, the beam-related information includes one or more of TCI information, SRI information or QCL information configured by the network device for the control link.

The beam preconfigured by the base station or the beam preconfigured by the high-layer network device may be a beam indicated in the other signaling received by the NCR before the beam for configuring the backhaul link, and this beam may be a beam other than the plurality of beams configured by the network device for the control link of the NCR or a beam included in the plurality of beams.

Based on the embodiments of the present disclosure, the first predefined rule in the above embodiment includes taking the beam preconfigured by the base station or the beam preconfigured by the high-layer network device as the beam used by the backhaul link before the signaling is received, i.e., the second beam is the beam preconfigured by the base station or the beam preconfigured by the high-layer network device.

Based on the above-mentioned scheme, the beam preconfigured by the base station or the high-layer network device is taken as the beam used by the backhaul link based on the predefined rule before the signaling is received, so that the beam used by the NCR has better communication performance before receiving the signaling for configuring the beam for the backhaul link and sent by the network device. Hence, it is able to ensure the communication quality between a forwarder of the NCR and the network device.

FIG. 11 is a flowchart of a backhaul link beam indication information according to an illustrative embodiment of the present disclosure, and this method is applied to an NCR. As shown in FIG. 11, the method includes the following steps.

S1101: the NCR receives a signaling for configuring a beam for a backhaul link sent by a network device, and the signaling includes beam indication information.

S1102: the NCR determines a target beam to be used by the backhaul link from a plurality of beams configured by the network device for a control link of the NCR based on the beam indication information.

S1103: the NCR takes a beam preconfigured by a base station or preconfigured by a high-layer network device as a beam used by the backhaul link before the target beam takes effect.

The network device is a base station or a high-layer network device, and the signaling for configuring the beam for the backhaul link is a RRC signaling sent by the base station via unicasting or multicasting or a signaling carried in an OAM message sent by the high-layer network device, which will not be particularly defined herein.

For example, the beam indication information includes one or more of a beam ID, a reference signal ID, beam-related information, or a corresponding relation between the backhaul link and a target physical channel in the NCR.

In addition, the beam-related information includes one or more of TCI information, SRI information or QCL information configured by the network device for the control link.

The beam preconfigured by the base station or the high-layer network device may be a beam indicated in the other signaling received by the NCR before the beam for configuring the backhaul link, and this beam may be a beam other than the plurality of beams configured by the network device for the control link of the NCR or a beam included in the plurality of beams.

Based on the embodiments of the present disclosure, the second predefined rule in the above embodiment may include taking the beam preconfigured by the base station or the high-layer network device as the beam used by the backhaul link before the target beam takes effects, i.e., the third beam is the beam preconfigured by the base station or the beam preconfigured by the high-layer network device.

It should be appreciated that the beam preconfigured by the base station or high-layer network device before the target beam takes effect may be the same as, or different from, that before the signaling is received, i.e., the second beam may be the same as, or different from, the third beam.

Based on the above-mentioned scheme, the beam preconfigured by the base station or the high-layer network device is taken as the beam used by the backhaul link based on the predefined rule before the target beam takes effect, so that the beam used by the NCR has better communication performance before the target beam takes effect. Hence, it is able to ensure the communication quality between a forwarder of the NCR and the network device.

FIG. 12 is a flowchart of a method for backhaul link beam indication according to an illustrative embodiment of the present disclosure, and this method is applied to an NCR. As shown in FIG. 12, the method includes the following steps.

S1201: the NCR receives a signaling for configuring a beam for a backhaul link sent by a network device, and the signaling includes beam indication information.

S1202: the NCR determines a target beam to be used by the backhaul link from a plurality of beams configured by the network device for a control link of the NCR based on the beam indication information.

S1203: the NCR takes a beam currently used by the backhaul link as the beam used by the backhaul link before the signaling is received.

The network device is a base station or a high-layer network device, and the signaling for configuring the beam for the backhaul link is a RRC signaling sent by the base station via unicasting or multicasting or a signaling carried in an OAM message sent by the high-layer network device, which will not be particularly defined herein.

For example, the beam indication information includes one or more of a beam ID, a reference signal ID, beam-related information, or a corresponding relation between the backhaul link and a target physical channel in the NCR.

In addition, the beam-related information includes one or more of TCI information, SRI information or QCL information configured by the network device for the control link.

The first predefined rule in the above embodiment may further include taking the beam currently used by the backhaul link as the beam used by the backhaul link before the signaling is received, and the beam may be a default beam used by the backhaul link of the NCR, or a beam indicated by the network device before the signaling for configuring the beam for the backhaul link is received.

Based on the above-mentioned scheme, the NCR takes the beam currently used by the backhaul link as the beam used by the backhaul link based on the predefined rule before the signaling is received, so that the beam used by the NCR has better communication performance before the signaling for configuring the beam for the backhaul link sent by the network device is received. Hence, it is able to ensure the communication quality between a forwarder of the NCR and the network device.

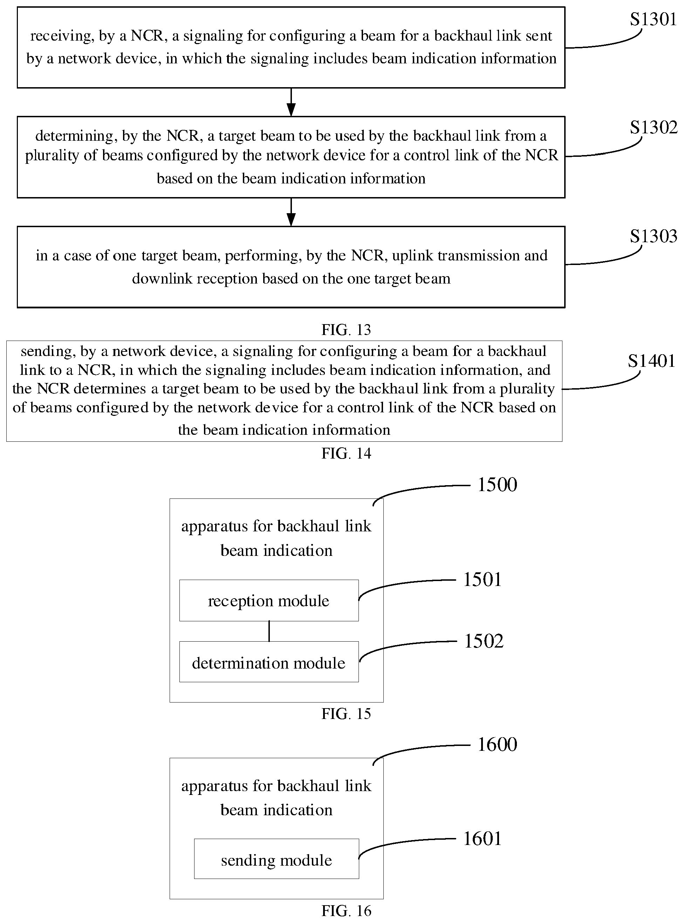

FIG. 13 is a flowchart of a method for backhaul link beam indication according to an illustrative embodiment of the present disclosure, and this method is applied to an NCR. As shown in FIG. 13, the method includes the following steps.

S1301: the NCR receives a signaling for configuring a beam for a backhaul link sent by a network device, and the signaling includes beam indication information.

S1302: the NCR determines a target beam to be used by the backhaul link from a plurality of beams configured by the network device for a control link of the NCR based on the beam indication information.

S1303: in a case of one target beam, the NCR performs uplink transmission and downlink reception based on the one target beam.

The network device is a base station or a high-layer network device, and the signaling for configuring the beam for the backhaul link is a RRC signaling sent by the base station via unicasting or multicasting or a signaling carried in an OAM message sent by the high-layer network device, which will not be particularly defined herein.

For example, the beam indication information includes one or more of a beam ID, a reference signal ID, beam-related information, or a corresponding relation between the backhaul link and a target physical channel in the NCR.

In addition, the beam-related information includes one or more of TCI information, SRI information or QCL information configured by the network device for the control link.

It should be appreciated that the signaling for configuring the beam for the backhaul link sent by the network device indicates one or two target beams to be used by the backhaul link of the NCR.

In some possible embodiments of the present disclosure, in a case of two target beams, i.e., a first target beam and a second target beam, the NCR performs downlink reception based on the first target beam and performs uplink transmission based on the second target beam.

The first target beam and the second target beam may be randomly selected by the NCR from the two target beams, or selected based on a predefined rule, which will not be particularly defined herein.

Based on the above-mentioned scheme, in a case that the signaling for configuring the beam for the backhaul link sent by the network device merely indicates one beam, the backhaul link of the NCR performs the uplink transmission and the downlink reception simultaneously based on the beam, and in a case that the signaling for configuring the beam for the backhaul link sent by the network device indicates two beams, the two beams are used for the uplink transmission and the downlink reception respectively. Hence, it is able to further improve the communication quality between the NCR and the network device.

FIG. 14 is a flowchart of a method for backhaul link beam indication according to an illustrative embodiment of the present disclosure, and this method is applied to a network device. As shown in FIG. 14, the method includes the following step.

S1401: the network device sends a signaling for configuring a beam for a backhaul link to an NCR, the signaling includes beam indication information, and the NCR determines a target beam to be used by the backhaul link from a plurality of beams configured by the network device for a control link of the NCR based on the beam indication information.

The network device is a base station or a high-layer network device, and the target beam is a beam having better communication performance predetermined by the network device based on the communication quality of the plurality of beams for the communication between the network device and the control link of the NCR.

For example, the beam indication information in the signaling for configuring the beam for the backhaul link sent by the network device to the NCR indicates one or two beams. In a case that it indicates only one beam, the NCR uses the beam to perform the uplink transmission and the downlink reception. In a case that it indicates two beams, the NCR uses the two beams to perform the uplink transmission and the downlink reception respectively.

For example, the signaling for configuring the beam for the backhaul link is sent by the base station or a high-layer network device. To be specific, the signaling is a RRC signaling sent by the base station, or a signaling carried in an OAM message sent by the high-layer network device.

For example, the RRC signaling for configuring the beam for the backhaul ink is sent by the base station via unicasting or multicasting.

For example, the beam indication information includes one or more of a beam ID, a reference signal ID, beam-related information, or a corresponding relation between the backhaul link and a target physical channel in the NCR.

In addition, the beam-related information includes one or more of TCI information, SRI information or QCL information configured by the network device for the control link.

In the embodiments provided in FIGs. 2 to 7, the NCR may determine the target beam to be used by the backhaul link in a corresponding way from the plurality of beams configured by the network device for the control link of the NCR based on the information included in the beam indication information, and determine the effective time of the target beam based on the information included in the beam indication information.

Further, in the embodiments provided in FIGs. 8 to 13, the NCR may further determine the beam used by the backhaul link of the NCR before the signaling for configuring the beam for the backhaul link sent by the network device is received and/or before the target beam takes effect based on the predefined rule.

In the embodiments of the present disclosure, the network device sends the signaling for configuring the beam for the backhaul link to the NCR, so that the NCR determines a beam with a better performance from the plurality of beams configured by the network device in advance for the control line directly based on the beam indication information in the signaling. It is able for the NCR to rapidly determine the beam with a better performance for the backhaul link without any necessity to test the plurality of beams one by one, thereby improving the communication efficiency and performance.

It should be appreciated that the above-mentioned embodiments implemented by the NCR correspond to the above-mentioned embodiments implemented by the network device, so some steps may be described merely at one side, and corresponding operations will be performed inevitably at the other side. For example, the network device sends the signaling for configuring the beam for the backhaul link to the NCR via broadcasting, unicasting or multicasting, and a terminal may receive the signaling in a corresponding way inevitably.

The following description will be given to apparatuses in the embodiments of the present disclosure. It should be appreciated that the function of each module has already been described in details in the relevant method embodiments, and thus will not be particularly defined herein.

FIG. 15 is a block diagram of an apparatus for backhaul link beam indication according to an illustrative embodiment of the present disclosure, and this apparatus is applied to an NCR. As shown in FIG. 15, the apparatus 1500 for backhaul link beam indication includes a reception module 1501 and a determination module 1502. The reception module 1501 is configured to receive a signaling for configuring a beam for a backhaul link sent by a network device, and the signaling includes beam indication information. The determination module 1502 is configured to determine a target beam to be used by the backhaul link from a plurality of beams configured by the network device for a control link of the NCR based on the beam indication information.

Optionally, the beam indication information includes one or more of a beam ID, a reference signal ID, beam-related information, or a corresponding relation between the backhaul link and a target physical channel in the NCR.

Optionally, the beam-related information includes one or more of TCI information, SRI information or QCL information configured by the network device for the control link.

Optionally, the beam indication information includes a beam ID or a reference signal ID. The apparatus 1500 for backhaul link beam indication further includes a first determination module configured to determine the target beam to be used by the backhaul link based on the reference signal ID or the beam ID.

Optionally, the beam indication information includes beam-related information. The apparatus 1500 for backhaul link beam indication further includes a second determination module configured to: determine a first reference signal ID in the beam-related information based on the beam-related information; and determine the target beam to be used by the backhaul link based on the first reference signal ID.

Optionally, the apparatus 1500 for backhaul link beam indication further includes a first time determination module configured to determine an effective time of the target beam based on a predetermined duration in a communication protocol or a predetermined duration configured by the network device. The predetermined duration is a duration relative to a specific moment, and the specific moment includes an end moment when the NCR finishes receiving a PDSCH where the beam indication information is located, and/or a moment when the NCR feeds back a last symbol of an uplink resource for HARQ-ACK information for the PDSCH including the beam indication information.

Optionally, the beam indication information includes a corresponding relation. The apparatus 1500 for backhaul link beam indication further includes a third determination module configured to: determine a first beam to be used by the target physical channel from the plurality of beams configured by the network device for the control link of the NCR based on the corresponding relation; and take the first beam as the target beam.

Optionally, the apparatus 1500 for backhaul link beam indication includes: a second time determination module configured to determine a first time when the first beam is used by the target physical channel; and a third time determination module configured to determine the first time as an effective time of the target beam to be used by the backhaul link.

Optionally, the apparatus 1500 for backhaul link beam indication includes a fourth determination module configured to determine a beam used by the backhaul link before the signaling is received and/or before the target beam takes effect based on a predefined rule.

Optionally, the predefined rule includes a first predefined rule and a second predefined rule, and the fourth determination module is specifically configured to determine a second beam used by the backhaul link before the signaling is received based on the first predefined rule, and determine a third beam used by the backhaul link before the target beam takes effect based on the second predefined rule.

Optionally, the fourth determination module is specifically configured to take a beam preconfigured by a base station or a high-layer network device as the beam used by the backhaul link before the signaling is received.

Optionally, the fourth determination module is specifically configured to take a beam preconfigured by the base station or the high-layer network device as the beam used by the backhaul link before the target beam takes effect.

Optionally, the fourth determination module is specifically configured to take a beam currently used by the backhaul link as the beam used by the backhaul link before the signaling is received.

Optionally, the signaling for configuring the beam for the backhaul link is a RRC signal sent by the base station, or a signaling carried in an OAM message sent by the high-layer network device.

Optionally, the RRC signaling is sent by the base station via unicasting or multicasting.

Optionally, the apparatus 1500 for backhaul link beam indication includes: a fifth determination module configured to, in a case of one target beam, perform uplink transmission and downlink reception based on the target beam; and a sixth determination module configured to, in a case of two target beams, i.e., a first target beam and a second target beam, perform downlink reception based on the first target beam and perform uplink transmission based on the second target beam.

FIG. 16 is a block diagram of an apparatus for backhaul link beam indication according to an illustrative embodiment of the present disclosure, and this apparatus is applied to a network device. As shown in FIG. 16, the apparatus 1600 for backhaul link beam indication includes a sending module 1601. The sending module 1601 is configured to send a signaling for configuring a beam for a backhaul link to an NCR, the signaling includes beam indication information, and the NCR determines a target beam to be used by the backhaul link from a plurality of beams configured by the network device for a control link of the NCR based on the beam indication information.

The apparatus 1600 for backhaul link beam indication is a base station or a high-layer network device. The target beam is a beam having better communication performance determined by the apparatus 1600 for backhaul link beam indication in advance based on communication quality of the plurality of beams for the communication between the apparatus 1600 for backhaul link beam indication and the control link of the NCR.

For example, the beam indication information in the signaling for configuring the beam for the backhaul link sent by the apparatus 1600 for backhaul link beam indication to the NCR indicates one or two beams. In a case that it indicates only one beam, the NCR uses the beam to perform the uplink transmission and the downlink reception. In a case that it indicates two beams, the NCR uses the two beams to perform the uplink transmission and the downlink reception respectively.

For example, the signaling for configuring the beam for the backhaul link is sent by the base station or the high-layer network device. To be specific, the signaling is a RRC signaling sent by the base station, or a signaling carried in an OAM message sent by the high-layer network device.

For example, the RRC signaling for configuring the beam for the backhaul link is sent by the base station via unicasting or multicasting.

For example, the beam indication information includes one or more of a beam ID, a reference signal ID, beam-related information, or a corresponding relation between the backhaul link and a target physical channel in the NCR.

In addition, the beam-related information includes one or more of TCI information, SRI information or QCL information configured by the network device for the control link.

In the embodiments provided in FIGs. 2 to 7, the NCR may determine the target beam to be used by the backhaul link in a corresponding way from the plurality of beams configured by the network device for the control link of the NCR based on the information included in the beam indication information, and determine the effective time of the target beam based on the information included in the beam indication information.

Further, in the embodiments provided in FIGs. 8 to 13, the NCR may further determine the beam used by the backhaul link of the NCR before the signaling for configuring the beam for the backhaul link sent by the network device is received and/or before the target beam takes effect based on the predefined rule.

The present disclosure further provides in some embodiments a computer-readable storage medium storing therein computer program instructions. The computer program instructions, when executed by a processor, implement the steps of the method for backhaul link beam indication provided in any one of the above method embodiments of the present disclosure.

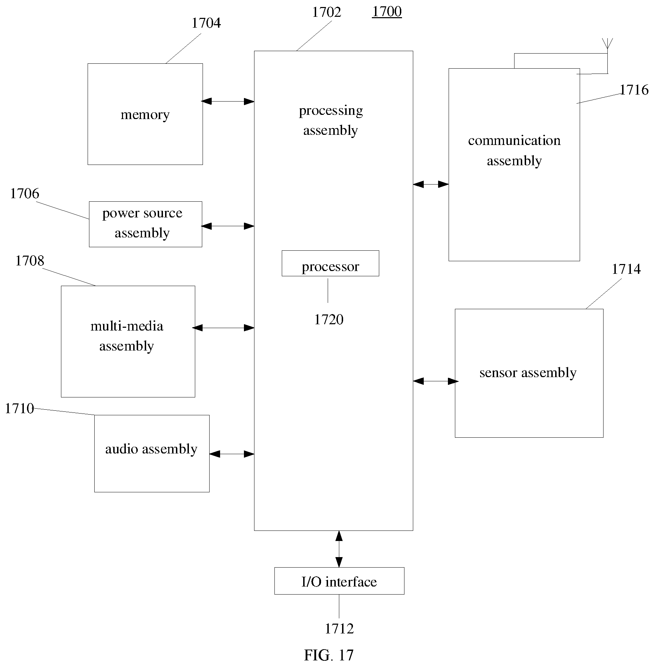

FIG. 17 is a block diagram of an NCR 1700 according to an illustrative embodiment of the present disclosure.

Referring to FIG. 17, the NCR 1700 includes one or more of a processing assembly 1702, a memory 1704, a power source assembly 1706, a multi-media assembly 1708, an audio assembly 1710, an Input/Output (I/O) interface 1712, a sensor assembly 1714, and a communication assembly 1716.

Generally, the processing assembly 1702 controls an entire operation of the NCR 1700, e.g., operations associated with display, phone call, data communication, camera operation and recording operation. The processing assembly 1702 includes one or more processors 1720 to execute instructions, so as to implement all of, or a part of, the steps of the above-mentioned methods. In addition, the processing assembly 1702 includes one or more modules for the interaction between the processing assembly 1702 and the other assembly. For example, the processing assembly 1702 includes a multi-media module for the interaction between the multi-media assembly 1708 and the processing assembly 1702.

The memory 1704 is configured to store therein various types of data to support the operation of the NCR 1700. Examples of such data include instructions for any application or method operated on the NCR 1700, contact data, phonebook data, messages, pictures, video, etc. The memory 1704 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 1706 provides power to various assemblies of the NCR 1700. The power source assembly 1706 may include a power management system, one or more power sources, and any other assemblies associated with the generation, management and distribution of power in the NCR 1700.

The multi-media assembly 1708 includes a screen for providing an output interface between the NCR 1700 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media assembly 1708 includes a front-facing camera and/or a rear-facing camera. When the NCR 1700 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 1710 is configured to output and/or input audio signals. For example, the audio assembly 1710 includes a microphone (MIC) configured to receive an external audio signal when the NCR 1700 is in an operating mode, such as a call mode, a recording mode, and a voice recognition mode. The received audio signal may be further stored in the memory 1704 or transmitted via the communication assembly 1716. In some embodiments of the present disclosure, the audio assembly 1710 further includes a speaker to output audio signals.

The I/O interface 1712 provides an interface between the processing assembly 1702 and peripheral interface modules, such as a keyboard, a click wheel, buttons, and the like. The buttons may include, but not limited to, a home button, a volume button, a starting button, and a locking button.

The sensor assembly 1714 includes one or more sensors to provide status assessments about various aspects of the NCR 1700. For example, the sensor assembly 1714 may detect an open/closed status of the NCR 1700, relative positioning of assemblies, e.g., the display and the keypad, of the NCR 1700, a change in a position of the NCR 1700 or an assembly of the NCR 1700, a presence or absence of user contact with the NCR 1700, an orientation or an acceleration/deceleration of the NCR 1700, and a change in a temperature of the NCR 1700. The sensor assembly 1714 may include a proximity sensor configured to detect the presence of nearby objects without any physical contact. The sensor assembly 1714 may also include a light sensor, such as a Complementary Metal Oxide Semiconductor (CMOS) or Charge-Coupled Device (CCD) image sensor, for use in imaging applications. In some embodiments of the present disclosure, the sensor assembly 1714 may also include an accelerometer sensor, a gyroscope sensor, a magnetic sensor, a pressure sensor, or a temperature sensor.

The communication assembly 1716 is configured to facilitate wired or wireless communication between the NCR 1700 and other devices. The NCR 1700 may access a wireless network based on a communication standard, such as Wi-Fi, 2G or 3G, or a combination thereof. In an exemplary embodiment of the present disclosure, the communication assembly 1716 receives a broadcast signal or broadcast associated information from an external broadcast management system via a broadcast channel. In an exemplary embodiment of the present disclosure, the communication assembly 1716 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In an illustrative embodiment of the present disclosure, the NCR 1700 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

The present disclosure further provides in some embodiments a non-temporary computer-readable storage medium including instructions, e.g., the memory 1704 including the instructions. The instructions are executed by the processor 1720 of the NCR 1700 to implement the above-mentioned method. For example, the non-temporary computer-readable storage medium may be an ROM, Random Access Memory (RAM), a CD-ROM, a magnetic tape, a floppy disk, an optical data storage device, etc.

The present disclosure further provides in some embodiments a computer program product including a computer program executed by a programmable apparatus. The computer program has a code section which is executed by the programmable apparatus to implement the above-mentioned method for backhaul link beam indication.

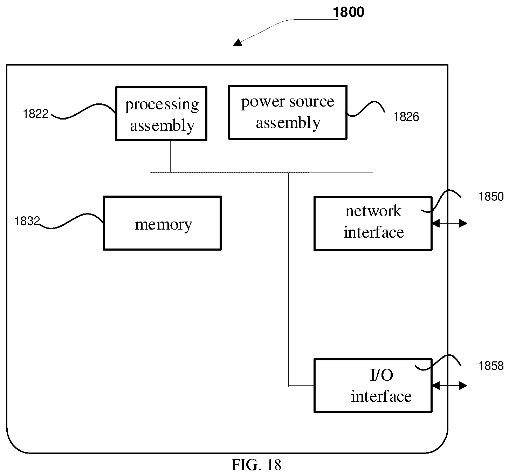

FIG. 18 is a block diagram of a network device according to an illustrative embodiment of the present disclosure. For example, the network device 1800 is provided as a base station, or provided as any other network logic entity in a core network. Referring to FIG. 18, the network device 1800 includes a processing assembly 1822, and further includes one or more processors and memory resources represented by a memory 1832 for storing therein instructions to be executed by the processing assembly 1822, e.g., applications. The applications stored in the memory 1832 may include one or more modules each corresponding to one group of instructions. In addition, the processing assembly 1822 is configured to execute the instructions, so as to implement the steps of the method for backhaul link beam indication provided in the above-mentioned method embodiments.

The network device 1800 further includes a power source assembly 1826 configured to performed power management over the network device 1800, a wired or wireless network interface 1850 configured to couple the network device 1800 to a network, and an Input/Output (I/O) interface 1858. The network device 1800 may be based on an operating system stored in the memory 1832, e.g., Windows Server^{™}, Mac OS X^{™}, Unix^{™}, Linux^{™}, Free BSD^{™}, or the like.

The present disclosure further provides in some embodiments a computer program product including a computer program executed by a programmable apparatus. The computer program includes a code section which is executed by the programmable apparatus to implement the above-mentioned method for backhaul link beam indication.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. A method for backhaul link beam indication, applied to a network controlled repeater (NCR), comprising:
receiving a signaling for configuring a beam for a backhaul link sent by a network device, wherein the signaling comprises beam indication information; and
determining a target beam to be used by the backhaul link from a plurality of beams configured by the network device for a control link of the NCR based on the beam indication information.

2. The method according to claim 1, wherein the beam indication information comprises one or more of a beam identity (ID), a reference signal ID, beam-related information, or a corresponding relation between the backhaul link and a target physical channel in the NCR.

3. The method according to claim 2, wherein the beam-related information comprises one or more of transmission configuration indicator (TCI) information, spatial relation indicator (SRI) information or quasi-co-location (QCL) information configured by the network device for the control link.

4. The method according to claim 2, wherein the beam indication information comprises the beam ID or the reference signal ID,
wherein determining the target beam to be used by the backhaul link from the plurality of beams configured by the network device for the control link of the NCR based on the beam indication information comprises:
determining the target beam to be used by the backhaul link based on the reference signal ID or the beam ID.

5. The method according to claim 2, wherein the beam indication information comprises the beam-related information,
wherein determining the target beam to be used by the backhaul link from the plurality of beams configured by the network device for the control link of the NCR based on the beam indication information comprises:
determining a first reference signal ID in the beam-related information based on the beam-related information; and
determining the target beam to be used by the backhaul link based on the first reference signal ID.

6. The method according to claim 4 or 5, further comprising:
determining an effective time of the target beam based on a predetermined duration in a communication protocol or a predetermined duration configured by the network device, wherein the predetermined duration is a duration relative to a specific moment,
wherein the specific moment comprises an end moment when the NCR finishes receiving a physical downlink shared channel (PDSCH) where the beam indication information is located, and/or a moment when the NCR feeds back a last symbol of an uplink resource for hybrid automatic repeated request acknowledgement (HARQ-ACK) information for the PDSCH comprising the beam indication information.

7. The method according to claim 2, wherein the beam indication information comprises the corresponding relation,
wherein determining the target beam to be used by the backhaul link from the plurality of beams configured by the network device for the control link of the NCR based on the beam indication information comprises:
determining a first beam to be used by the target physical channel from the plurality of beams configured by the network device for the control link of the NCR based on the corresponding relation; and
taking the first beam as the target beam.

8. The method according to claim 7, further comprising:
determining a first time when the first beam is used by the target physical channel; and
determining the first time as an effective time of the target beam to be used by the backhaul link.

9. The method according to claim 1, further comprising:
determining a beam used by the backhaul link before the signaling is received and/or before the target beam takes effect based on a predefined rule.

10. The method according to claim 9, wherein determining the beam used by the backhaul link before the signaling is received based on the predefined rule comprises:
taking a beam preconfigured by a base station or a beam preconfigured by a high-layer network device as the beam used by the backhaul link before the signaling is received.

11. The method according to claim 9, wherein determining the beam used by the backhaul link before the target beam takes effect based on the predefined rule comprises:
taking a beam preconfigured by a base station or a beam preconfigured by a high-layer network device as the beam used by the backhaul link before the target beam takes effect.

12. The method according to claim 9, wherein determining the beam used by the backhaul link before the target beam takes effect based on the predefined rule comprises:
taking a beam currently used by the backhaul link as the beam used by the backhaul link before the signaling is received.

13. The method according to claim 1, wherein the signaling for configuring the beam for the backhaul link is a radio resource control (RRC) signaling sent by a base station, or a signaling carried in an operation administration and maintenance (OAM) message sent by a high-layer network device.

14. The method according to claim 14, wherein the RRC signaling is sent by the base station via unicasting or multicasting.

15. The method according to claim 1, further comprising:
in a case of one target beam, performing uplink transmission and downlink reception based on the one target beam.

16. The method according to claim 1, further comprising:
in a case of two target beams, being a first target beam and a second target beam, performing downlink reception based on the first target beam, and performing uplink transmission based on the second target beam.

17. A method for backhaul link beam indication, applied to a network device, comprising:
sending a signaling for configuring a beam for a backhaul link to an NCR, wherein the signaling comprises beam indication information, wherein the NCR determines a target beam to be used by the backhaul link from a plurality of beams configured by the network device for a control link of the NCR based on the beam indication information.

18. The method according to claim 17, wherein the beam indication information comprises one or more of a beam ID, a reference signal ID, beam-related information, or a corresponding relation between the backhaul link and a target physical channel in the NCR.

19. The method according to claim 18, wherein the beam-related information comprises one or more of TCI information, SRI information or QCL information configured by the network device for the control link.

20. The method according to claim 17, wherein the signaling for configuring the beam for the backhaul link is a RRC signaling sent by a base station, or a signaling carried in an OAM message sent by a high-layer network device.

21. The method according to claim 20, wherein the RRC signaling is sent by the base station via unicasting or multicasting.

22. An apparatus for backhaul link beam indication, applied to an NCR, comprising:
a reception module configured to receive a signaling for configuring a beam for a backhaul link sent by a network device, wherein the signaling comprises beam indication information; and
a determination module configured to determine a target beam to be used by the backhaul link from a plurality of beams configured by the network device for a control link of the NCR based on the beam indication information.

23. An apparatus for backhaul link beam indication, applied to a network device, comprising:
a sending module configured to send a signaling for configuring a beam for a backhaul link to an NCR, wherein the signaling comprises beam indication information, and the NCR determines a target beam to be used by the backhaul link from a plurality of beams configured by the network device for a control link of the NCR based on the beam indication information.

24. A device for backhaul link beam indication, comprising:
a processor; and
a memory storing therein instructions executable by a processor,
wherein the processor is configured to:
receive a signaling for configuring a beam for a backhaul link sent by a network device, wherein the signaling comprises beam indication information; and
determine a target beam to be used by the backhaul link from a plurality of beams configured by the network device for a control link of the NCR based on the beam indication information.

25. A device for backhaul link beam indication, comprising:
a processor; and
a memory storing therein instructions executable by a processor,
wherein the processor is configured to:
send a signaling for configuring a beam for a backhaul link to an NCR, wherein the signaling comprises beam indication information and the NCR determines a target beam to be used by the backhaul link from a plurality of beams configured by the network device for a control link of the NCR based on the beam indication information.

26. A computer-readable storage medium storing therein computer program instructions, wherein the computer program instructions, when executed by a processor, implement the steps of the method for backhaul link beam indication according to any one of claims 1 to 16, or the steps of the method for backhaul link beam indication according to any one of claims 17 to 21.
